# EUROPEAN PATENT APPLICATION

(11) **EP 3 848 777 A1**
(43) Date of publication of application: **14.07.2021**
(21) Application number: 19860282.3
(22) Date of filing: 03.09.2019
(51) Int. Cl.: G06F 1/329

(54) **METHOD AND APPARATUS FOR DETECTING APPLICATION TO BE MANAGED, METHOD AND APPARATUS FOR CONTROLLING APPLICATION, TERMINAL, AND STORAGE MEDIUM**

(30) Priority: 14.09.2018 CN 201811074223
(71) Applicant: ZTE Corporation, Shenzhen, Guangdong 518057 (CN)
(72) Inventor: HE, Zhibin, Shenzhen, Guangdong 518057 (CN); KAN, Yong, Shenzhen, Guangdong 518057 (CN)
(74) Representative: Vinsome, Rex Martin
(86) International application number: PCT/CN2019/104171
(87) International publication number: WO 2020/052471

(57) **Abstract**

The present disclosure discloses a method and an apparatus for detecting an application to be managed, a method and an apparatus for controlling an application, a terminal and a storage medium. The method comprises: during the process of using a terminal, acquiring candidate applications satisfying a preset first power consumption condition from applications currently running on the terminal, so as to obtain a set of candidate applications (S101); and determining (S 102), according to a preset application type identification rule, a target application from the set of candidate applications, the target application being not of a preset application type, and the target application being an application to be managed for power consumption management. The present disclosure firstly selects, by means of a first power consumption condition, a set of candidate applications to be managed on a terminal, and then further filters, according to an application type identification rule, the candidate applications in the set of candidate applications to obtain an application that needs power consumption management, thereby improving accuracy of detection of an application to be managed that has abnormal power consumption.

## Description

### CROSS REFERENCE TO RELATED APPLICATIONS

The present application claims to priority of a Chinese patent application No. 201811074223.7, entitled "METHOD AND APPARATUS FOR DETECTING APPLICATION TO BE MANAGED, METHOD AND APPARATUS FOR CONTROLLING APPLICATION, TERMINAL, AND STORAGE MEDIUM" filed September 14, 2018, which is incorporated by reference herein in its entirety.

### TECHNICAL FIELD

The present disclosure relates to the field of communication technology, especially to a method and apparatus for detecting an application to be managed, a method and apparatus for controlling an application, a terminal, and a storage medium.

### BACKGROUND

As smart terminal technology is developing and as it plays an increasingly important role in people's life and work, more and more applications are installed on terminals, and functions of the applications are becoming more and more abundant and powerful to meet users' various application requirements in their life and work.

However, with diversification of applications and powerful functions of the terminals, the following problems are often found during use of the terminals: the more applications are installed in a terminal, the faster the battery is consumed and the less the memory of the terminal is available, even if some applications are not used. This is because some applications frequently occupy system resources such as CPU in background even if the applications are not used, causing the terminal to consume a lot of power. Accordingly, battery function and hardware resources such as a memory of the terminal are not sufficient for a variety of applications, thereby affecting a user's experience.

Therefore, for applications installed in a terminal, it is particularly important to know how to accurately determine applications that need to be managed for power consumption management.

### SUMMARY

The present disclosure provides a method and apparatus for detecting an application to be managed, a method and apparatus for controlling an application, a terminal, and a storage medium. The present disclosure is directed to mainly solve a problem of how to accurately determine an application to be managed on a terminal.

In order to address the above technical problem, the present disclosure provides a method for detecting an application to be managed, comprising: acquiring candidate applications satisfying a preset first power consumption condition from applications currently running on the terminal, so as to obtain a set of candidate applications; and determining, according to a preset application type identification rule, a target application from the set of candidate applications, the target application being not of a preset application type, and the target application being an application to be managed.

In order to address the above technical problem, the present disclosure further provides a method for controlling an application, comprising: determining the application to be managed from the applications currently running on the terminal through the method for detecting the application to be managed as described in the above; and performing a power saving control on the application to be managed.

In order to address the above technical problem, the present disclosure further provides an apparatus for detecting an application to be managed, comprising: a primary determining module configured to acquire candidate applications satisfying a preset first power consumption condition from applications currently running on the terminal, so as to obtain a set of candidate applications; and a processing module, configured to determine, according to a preset application type identification rule, a target application from the set of candidate applications, the target application being not of a preset application type, and the target application being an application to be managed.

In order to address the above technical problem, the present disclosure further provides an apparatus for controlling an application, comprising the apparatus for detecting the application to be managed as described in the above and comprising a control module; the control module being configured to perform a power saving control on the application to be managed determined by the apparatus for detecting the application to be managed.

In order to address the above technical problem, the present disclosure further provides a terminal, comprising a processor, a storage and a communication bus; the communication bus being configured to connect the processor with the storage; the processor being configured to execute a first computer program stored in the storage to implement steps of the method for detecting the application to be managed as described in the above; or the processor being configured to execute a second computer program stored in the storage to implement steps of the method for controlling the application as described in the above.

In order to address the above technical problem, the present disclosure further provides a computer readable storage medium storing therein one or more first computer programs executable by one or more processors to implement steps of the method for detecting the application to be managed as described in the above; or the computer readable storage medium storing therein one or more second computer programs executable by one or more processors to implement steps of the method for controlling the application as described in the above.

Other features and corresponding advantageous effects of the present disclosure will be described in the following. It shall be appreciated that some advantageous effects are obvious based on the disclosure of the present disclosure.

### BRIEF DESCRIPTION OF THE DRAWINGS

FIG. 1 is a flowchart of a method for detecting an application to be managed according to Embodiment One of the present disclosure.
FIG. 2 is a schematic diagram for a method for controlling application according to Embodiment Two of the present disclosure.
FIG. 3 is Flowchart One of a method for detecting an application to be managed according to Embodiment Two of the present disclosure.
FIG. 4 is Flowchart Two of a method for detecting an application to be managed according to Embodiment Two of the present disclosure.
FIG. 5 is Flowchart Three of a method for detecting an application to be managed according to Embodiment Two of the present disclosure.
FIG. 6 is a schematic diagram of a structure of an apparatus for detecting an application to be managed according to Embodiment Three of the present disclosure.
FIG. 7 is a schematic diagram of a structure of an apparatus for controlling an application according to Embodiment Three of the present disclosure.
FIG. 8 is a flowchart of a method for dynamically freezing the application to be managed according to Embodiment Three of the present disclosure.
FIG. 9 is a schematic diagram of a structure of a terminal according to Embodiment Four.

### DETAILED DESCRIPTION

In order to make the objective, the technical features and the advantages of the present disclosure clearer, some embodiments of the present disclosure will be explained below in detail with reference to the accompanying drawings and embodiments. It should be understood that the specific embodiments are described here only for explaining the disclosure but not for limiting the disclosure.

The present disclosure has the following technical effect: according to the method and apparatus for detecting an application to be managed, the method and apparatus for controlling an application, the terminal, and the storage medium, during use of the terminal, candidate applications satisfying a preset first power consumption condition, among applications currently running on the terminal, may be acquired to obtain a set of candidate applications; and then a target application, among the set of candidate applications, not belonging to a preset application type determined according to a preset application type identification rule may be screened, the obtained target application through screening being an application to be managed that is to be power-managed. In the present disclosure, by primarily selecting the set of candidate applications to be managed on the terminal through the first power consumption condition and then further screening the candidate applications in the set of candidate applications according to the application type identification rule to obtain final applications to be power-managed, accuracy of detecting the applications to be managed that involves abnormal power consumption may be increased.

In the present application, after the applications to be managed with abnormal power consumption among the applications currently running on the terminal are determined, a power-saving process may be performed on the applications to be managed, including but not being limited to a freezing process. Therefore, while the user's normal use is not affected, the terminal may be used for a longer time, a resource use rate is increased, and a user's experience is promoted.

### Embodiment One

This embodiment provides a method for detecting an application to be managed, which may implement accurate detection on whether power consumption of each application currently running on the terminal is abnormal, so as to provide an accurate basis for power saving control of the terminal, and further, while the user's normal use is not affected, the terminal may be used for a longer time, a resource use rate is increased, and a user's experience is improved.

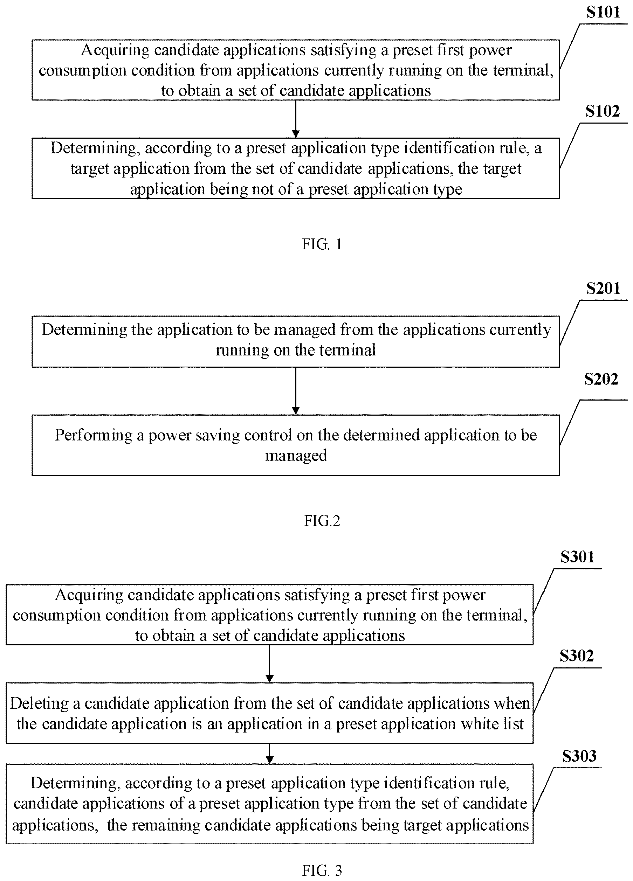

As shown in FIG. 1, the method for detecting the application to be managed provided in this embodiment includes: S101, acquiring candidate applications satisfying a preset first power consumption condition from applications currently running on the terminal, so as to obtain a set of candidate applications.

S102: determining, according to a preset application type identification rule, a target application from the set of candidate applications, the target application being not of a preset application type, and the target application being an application to be managed.

It shall be appreciated that the terminal in this embodiment may be any of various smart terminals that supports running of an application, including but being not limited to a mobile terminal such as a smart phone, a laptop, a digital broadcast receiver, a personal digital assistant (PDA), a portable android device (PAD), a portable media player (PMP), a navigation apparatus and the like, and fixed terminals such as a digital TV and a desktop computer. A system running on the terminal in this embodiment may include but not limited to Android, iOS, windows phone, Symbian, BlackBerry OS, windows mobile, windows series of operating systems provided by Microsoft running on personal computers, MAC series of operating systems provided by Apple Inc., and a linux system and so on.

In this embodiment, applications running on the terminal include various applications starting on the terminal and running in background, various applications running in foreground; or the applications running on the terminal include both applications running in background and applications running in foreground as required. When both the applications running in background and the applications running in foreground are included, all the applications currently running on the terminal may be monitored, so that abnormality of an application running in foreground may be timely and accurately detected when performing monitoring to applications running in background only, especially when a malicious application keeps a relevant process running in foreground of the terminal for attacking a bug as described above and thus the malicious application escaping from an abnormality monitoring and leading to failing to monitoring an abnormal application even if abnormal application monitoring is performed on the terminal. Therefore, in one example, when monitoring whether both the applications running in foreground and the applications running in background of the terminal meet the first power consumption condition, all the applications currently running on the terminal are monitored, thereby preventing the condition of failing to monitoring an abnormal application running in foreground resulted from that the application is not monitored due to a relevant technology, and thereby further promoting the user's experience.

In another example of this embodiment, monitoring may be performed for only various applications currently running in background of the terminal, this is because in some application scenarios, for example, terminals such as various smart phones and an IPAD, generally only one or two applications are running in foreground and the applications running in foreground are generally applications currently being used by the user. Therefore, in view of these application scenarios, monitoring may be performed for only the various applications currently running in background of the terminal. In this example, the preset first power consumption condition may include an application being currently running in background.

In this embodiment, the candidate applications selected according to the preset first power consumption from the applications running on the terminal are primarily determined to be applications of high power consumption. Therefore, in this embodiment, the first power consumption condition may include: an application being currently running in background and having a preset high power consumption behavior.

Alternatively, as shown in the above analysis, in some application scenarios, the first power consumption may only include having a preset high power consumption behavior, but whether the application is running in foreground or background will not be limited.

It shall be appreciated that in this embodiment, it may be determined which applications among the applications running on the terminal have a high power consumption behavior in various aspects, for example, this includes but is not limited to determining whether an application is currently a high power consumption application at least according to one or more of the following aspects: occupancy of a processor, occupancy of a memory, occupancy of a wake lock, occupancy of a location resource and occupancy of a sensor, so as to determine whether to take the application into the set of candidate applications.

In one example, the preset high power consumption behavior may include but is not limited to at least one of the following: an occupancy status of the processor complying with a preset first status. In this embodiment, the processor includes at least one of a central processing unit (CPU) and a graphics processing unit (GPU). The occupancy status of the processor in this embodiment may include an occupancy duration of the processor, or occupancy of resources of the processor, or both the occupancy duration of the processor (which may be a continuous duration or a total duration of occupying the processor within a period) and occupancy of resources of the processor, or a value indicating amount of resources of the processor being occupied. Correspondingly, the first status may include a preset occupancy duration threshold of the processor and/or a preset threshold for occupancy of resources of the processor. In one example, the occupancy status of the processor may include an occupancy duration of the processor, and so it is considered that the occupancy status of the processor complies with the preset first status when the occupancy duration of the processor is greater than or equal to preset occupancy duration threshold of the processor. Correspondingly, in another example, when the occupancy status of the processor includes a value indicating amount of resources of the processor being occupied (which may be a proportional value or an absolute value of occupancy of the resource), and when the value indicating amount of resources of the processor being occupied is greater than the preset threshold for occupancy of resources of the processor, it is considered that the occupancy status of the processor complies with the preset first status.

An occupancy status of a memory complies with a preset second status. In this embodiment, the occupancy status of the memory may be a change tendency of an application occupying a memory resource. At this time, the second status may be that the amount of resources of the processor being occupied increases or gradually increases and the like. In this embodiment, the occupancy status of the memory may also be a value indicating the amount of occupancy of the memory (which may be a proportional value (the proportional value may be a rank for the proportions of resources occupied by applications) or an absolute value of the amount of occupied resources) occupied by the application. Herein, the second status may include a threshold for occupancy of resources of the processor, and when the value indicating the amount of occupancy of the memory is greater than or equal to the threshold for occupancy of resources of the processor, it may be considered that the occupancy status of the memory of the application complies with the preset second status.

An occupancy status of a wake lock complies with a preset third status. In this embodiment, the occupancy status of the wake lock may be an occupancy duration of the wake lock(which may be a continuous duration or a total duration of occupying the processor within a period) . Correspondingly, the third status may include a preset occupancy duration threshold of the wake lock. In one example, the occupancy status of the wake lock includes a wake lock occupancy duration, and when the wake lock occupancy duration is greater than the occupancy duration threshold of the wake lock, it is considered that the occupancy status of the wake lock complies with the preset third status.

An occupancy status of a location resource complies with a preset fourth status. The location resource in this embodiment includes various resources for implementing locating the terminal, including but being not limited to a global positioning system (GPS). The occupancy status of the location resource may be an occupancy duration of the location resource (which may be a continuous duration or a total duration of occupying the processor within a period), or may be an application frequency for the occupancy of the location resource. Correspondingly, the fourth status may include a preset occupancy duration threshold of the location resource and/or a threshold of application frequency for the occupancy of the location resource. In one example, the occupancy status of the location resource includes an occupancy duration of the location resource, and when the occupancy duration of the location resource is greater than or equal to the preset occupancy duration threshold of the location resource, it is considered that the occupancy status of the location resource complies with the preset fourth status. For another example, the occupancy status of the location resource includes the application frequency for the occupancy of the location resource, and when a value indicating the application frequency for the occupancy of the location resource is greater than or equal to the threshold of application frequency for the occupancy of the location resource, it is considered that the occupancy status of the location resource complies with the preset fourth status.

An occupancy status of a sensor resource complies with a preset fifth status. The sensor in this embodiment may be any of the sensors (for example, a proximity sensor, a gravity sensor, an image acquisition sensor and the like) except a GPS sensor for location on the terminal. The occupancy status of the sensor resource in this embodiment may be an occupancy duration (which may be a continuous duration or a total duration of occupying the processor within a period) of the sensor resource, or may be an application frequency for the occupancy of the sensor resource. Correspondingly, the fifth status may include a preset occupancy duration threshold of the sensor resource and/or an threshold of application frequency for the occupancy of the sensor resource. In one example, the occupancy status of the sensor resource includes an occupancy duration of the sensor resource, and when the occupancy duration of the sensor resource is greater than or equal to the occupancy duration threshold of the sensor resource, it is considered that the occupancy status of the sensor resource complies with the preset fourth status. For another example, the occupancy status of the sensor resource includes the application frequency for the occupancy of the sensor resource, and when a value indicating the application frequency for the occupancy of the sensor resource is greater than or equal to the application frequency threshold of the occupancy of the sensor resource, it is considered that the occupancy status of the location resource complies with the preset fifth status.

As shown in the above analysis, in this embodiment, the preset high power consumption behavior may include any one or more of actions exemplified above. In a case where two or more actions are included, an application may be determined as a candidate application as long as the application has any one of the actions exemplified above. Alternatively, in some application examples, the application may not be determined as a candidate application unless the application has two or more of the actions exemplified above, according to a particular application scenario. It shall be appreciated that the preset high power consumption behavior in this embodiment is not limited to the above exemplified actions, but may be flexibly set and updated as required, and may be defined and updated by the user and/or a producer in some examples.

Accordingly, in this embodiment, an application with high power consumption among the applications running on the terminal may be screened through the preset first power consumption condition, but the application may not be directly determined as an abnormal application and thus be freezed for saving power just because the application has high power consumption, and thereby avoiding incorrect determination and affecting usage by a user. Therefore, in this embodiment, the candidate applications determined may be further accurately determined through the above S102, so as to increase an accuracy rate for determining an application with abnormal power consumption, thereby improving the user's experience.

It shall be appreciated that the number of candidate applications included in the set of candidate applications obtained through S101 may be 1, 0, or maybe two or more. Therefore, in some examples, it may be determined whether the number of candidate applications included in a current set of candidate applications is greater than or equal to 1 after S101 or before S102, and S102 is not implemented unless the number of candidate applications included in the current set of candidate applications is greater than 1.

In this embodiment, the preset application type identification rule is used to further determine which candidate applications from the set of candidate applications primarily determined in S101 are applications of abnormal power consumption and need to be managed. Therefore, the preset application type identification rule may any identification rule that can achieve an effect described above.

For example, in one application example, the preset application type may include but is not limited to at least one of a normal location type, a normal multimedia type, a normal game type and a normal downloading type. Correspondingly, the preset application type identification rule in this embodiment may include but is not limited to at least one of the following rules.

Rule One: determining that a candidate application is an application of the normal location type, when the preset application type comprises the normal location type, there is a location information interaction in the candidate application and interacted location information complies with a preset location information screening condition.

In this embodiment, the location information may include various messages generated during a location process, or particular information generated during the location process as required, the information including but being not limited to location data for determining a location, audio information for broadcasting or alerting. In one example, when the preset application type includes the normal location type, the preset location information screening condition may include but is not limited to the at least one of the following: locations corresponding to location data interacted within a preset time period is not one location, the time period may be flexible set, for example, 5 minutes, 10 minutes and the like, according to a particular requirement. In this embodiment, when determining whether the locations corresponding to the location data are one location, the locations corresponding to the location data at different time points may be compared. When a difference thereof is smaller than or equal to a preset difference threshold, the positions may be determined as one position. Alternatively, a random other manner may be used for determination.

The interacted location information does not comprise audio data. In one example of this embodiment, it may be set that when determining that the interacted information includes audio data, the candidate application is determined as a multimedia type application rather than to determine it as a location type application. Alternatively, in another application scenario, the candidate application may be further determined as a location type or multimedia type according to an audio data content (for example, audio content like navigation broadcasting).

In this embodiment, the interacted location information may be location information within a preset duration after an application is determined to be a candidate application, or location information within the preset time length before the application is determined to be the candidate application, or location information within a total preset time length before and after the application is determined to be the candidate application.

Rule Two: determining that a candidate application is an application of the normal multimedia type, when the preset application type comprises the normal multimedia type, there is a multimedia information interaction in the candidate application and interacted multimedia information complies with a preset multimedia information screening condition.

In this embodiment, the preset multimedia information screening condition is mainly used to determine whether a multimedia type application is in a normal use status. A particular determining rule may be flexible set. For example, it is assumed that a current candidate application is a video type multimedia application and it is detected that the candidate application is playing video but is running in background, it may be considered not to be normally used and be a high power consumption application to be managed. For another example, it is assumed that the current candidate application is an audio type multimedia application but audio data interacted thereby is mute data, it may be considered that the candidate application is not used normally and is a high power consumption application to be managed.

Therefore, in one example of this embodiment, when the preset application type comprises the normal multimedia type, the preset multimedia information screening condition may include but is not limited to one of the following: a video data not comprising a video playing data when the interacted multimedia information comprises the video data; and an audio data not comprising audio data in a mute status when the interacted multimedia information comprises the audio data.

In this embodiment, the interacted multimedia information may be interacted multimedia information within a preset time length after an application is determined to be a candidate application, or interacted multimedia information within the preset time length before the application is determined to be the candidate application, or interacted multimedia information within a total preset time length before and after the application is determined to be the candidate application.

Rule Three: determining that a candidate application is an application of the normal multimedia type, when the preset application type comprises the normal downloading type, there is a downloading data stream in the candidate application and the downloading data stream complies with a preset downloading condition.

For example, in some application scenarios, when the preset application type comprises the normal downloading type application, the preset downloading condition includes: a downloading rate of the downloading data stream being greater than or equal to a preset downloading rate value; the preset downloading rate value may be flexibly set, for example, to flexibly set according to a current network environment or a real-time remaining resource condition on the terminal.

Rule Four: determining that a candidate application is an application of the normal game type, when the preset application type comprises the normal game type, there is an interaction control instruction in the candidate application and the interaction control instruction complies with a preset interaction instruction screening condition.

In this embodiment, the preset interaction instruction screening condition is used to determine whether a certain candidate application is a game type application being normally used. Therefore, the preset interaction instruction screening condition may be determining whether the application currently includes various interaction control instructions of game type, for example, a direction control instruction, a skill release control instruction and so on, and the application may be flexibly determined to be an application of game type if the application currently includes various interaction control instructions of game type.

It shall be appreciated that the above four rules in this embodiment are only examples to facilitate understanding, but the preset application type identification rule in this embodiment is not limited to rules exemplified in the above. Besides, the preset application type identification rule in this embodiment may include any one, two or more of the above rules. When two or more of the above rules are included, a candidate application may be determined as running normally as long as the candidate application complies with any one of the rules. When two or more of the above rules are included, a time sequence for implementing the rules may be flexibly set, for example, the rules may be implemented in parallel or in a preset order. In some application scenarios, at least two of the above rules may be flexibly combined, and it may be set that after a certain candidate application meets any rule, the candidate application will not be determined using another rule.

In this embodiment, after the set of candidate applications is determined in S101, an initial type of each candidate application may be acquired. For example, registration information thereof may be recorded when the candidate application is being installed, or the registration information may be found in a database. The initial type may be determined according to the registration information. Then, an actual application type of the application may be determined according to the above rules. When the actual application type of the application is different from the initial type thereof, the application is updated to be of the actual application type.

Further, in this application, as some applications (for example, an application usually used by the user or an application that implements certain special functions) generally do not need to be managed with power saving, and in order to promote efficiency and accuracy of application detection, an application white list (which may be called special applications) may be set. An application that does not need to be managed with power saving may be added to the application white list which may be either manually or automatically updated. In this way, in one example, before determining, according to the preset application type identification rule, the target application from the set of candidate applications in 102, the method for detecting an application to be managed further comprises: deleting a candidate application from the set of candidate applications when it is determined that the candidate application is an application in a preset application white list.

Alternatively, in this embodiment, the application currently running on the terminal and belonging to the white list may be directly excluded in S101, and determination on whether the application is a candidate application will only be performed on applications beyond the list.

It shall be appreciated that in the application white list in this embodiment, applications included in the list will be indicated by saving various application identification information for uniquely identifying one application, so as to facilitate following screening, including but not limiting to at least one of a package name and a UID (user identification, for example, the global 32-bit unique digits) of the application.

Accordingly, in this embodiment, a candidate application with highest power consumption is determined according to power consumption of each application currently running on the terminal (in foreground and/or background). Further, it is determined whether the candidate application is an application normally used according to an application type that candidate applications belong to, so as to determine whether it is necessary to perform power-saving power consumption control, rather than directly determining a certain application currently running that belongs to the application list or beyond the operation mode as an application with abnormal power consumption. An application may be one with abnormal power consumption in some particular application scenarios, but it may be the application with normal power consumption in some other application scenarios (that is, the application is normally running). In a related art, an application belonging to the list is directly determined as an application with abnormal power consumption according to a preset application list or operation mode, thus there may be a great error and an application normally running may be misjudged as one with abnormal power consumption. Besides, a determination result is greatly dependent on an accurate setting of the application in the list, but the user generally cannot accurately adjust the list in real time to keep the list accurate, resulting in that the determination result obtained according to the preset application list has a great error, thereby lowering satisfaction of the user's experience.

In the method for detecting an application to be managed in this embodiment, however, the application to be managed that has abnormality and need to be provided with power-saving control is determined dynamically in real time according to a power consumption condition of the applications currently running on the terminal and according to an application type corresponding to the application, which does not require the user or a corresponding service provider to set or server a corresponding application list, and thus is more practical and smarter, more commonly used, and has better accuracy, thereby further promoting the user's experience.

### Embodiment Two

In this embodiment, a method for controlling an application is provided and may perform power-saving control on an application with abnormal power consumption on the terminal, to promote standby performance and resource use rate of the terminal. As shown in FIG. 2, in this embodiment, the method for controlling an application includes: S201: determining the application to be managed from the applications currently running on the terminal.

In this embodiment, a target application (i.e., an application to be managed) that has abnormal power consumption and needs to be managed exists among applications currently running on the terminal is determined through the method for detecting an application to be managed shown in the above embodiment. Alternatively, another method may be applied to determine the target application with abnormal power consumption among the applications currently running on the terminal.

S202: performing a power saving control on the determined application to be managed.

It shall be appreciated that performing the power saving control on the application to be managed may be implemented in various manners of performing power saving control on an application, including but being not limited to freezing the application to be managed or closing a process of a target application with a high power consumption.

An Android intelligent platform is taken as an example. When freezing the application to be managed, a freezing manner may be to disable an application through a system interface function such as "pm disable" and "am force-stop". Alternatively, positively closing the application may have the "freezing" effect. Alternatively, this embodiment is not limited to the two exemplified freezing methods. In some example in this embodiment, a corresponding unfreezing condition may be set to a frozen application, and the application may be unfrozen if it is detected that an unfreezing condition of the frozen application is satisfied.

In order to facilitate understanding, the following application examples are shown in this embodiment to further describe whether there is detection to the application to be managed among the applications currently running on the terminal.

### Example One

This example includes the application white list exemplified in the above embodiment, and may include the rules One, Two and Three in the above embodiment. In this embodiment, the process of determining whether the application to be managed exists in the applications currently running on the terminal is shown in FIG. 3, including: S301: acquiring candidate applications satisfying a preset first power consumption condition from applications currently running on the terminal, so as to obtain a set of candidate applications.

S302: deleting a candidate application from the set of candidate applications when the candidate application is an application in a preset application white list.

S303: determining, according to a preset application type identification rule, candidate applications of a preset application type from the set of candidate applications, then taking the remaining candidate applications in the set of candidate applications as target applications which will then be taken as current applications to be managed.

In this example, determining, according to a preset application type identification rule, candidate applications of a preset application type from the set of candidate applications in 303 may include with respect to each candidate application in the set of candidate applications, determining that the candidate application is of the normal multimedia type when there is a multimedia information interaction in the candidate application and interacted multimedia information complies with a preset multimedia information screening condition.

with respect to each candidate application in the set of candidate applications, it is determined that the candidate application is of the normal multimedia type application when there is a multimedia information interaction in the candidate application and the interacted multimedia information complies with the preset multimedia information screening condition.

With respect to each candidate application in the set of candidate applications, it is determined that the candidate application is of the normal downloading type application when there is a downloading data stream in the candidate application and the downloading data stream complies with the preset downloading condition.

### Example Two

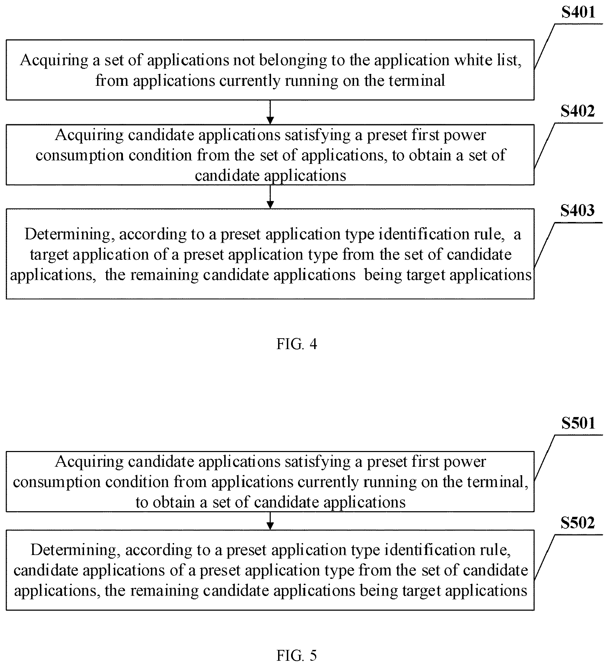

This example includes the application white list exemplified in the above embodiment, and may include the rules One, Two, Three and Four in the above embodiment. In this embodiment, the process of determining whether the application to be managed exists in the applications currently running on the terminal is shown in FIG. 4, including: S401: acquiring a set of applications not belonging to the application white list from applications currently running on the terminal.

S402: acquiring candidate applications satisfying a preset first power consumption condition from the set of applications, so as to obtain a set of candidate applications.

S403: determining, according to a preset application type identification rule, a target application of a preset application type from the set of candidate applications, then taking the remaining candidate applications in the set of candidate applications as target applications which will then be taken as current applications to be managed.

In this example, the process of determining, according to the preset application type identification rule, a target application of a preset application type from the set of candidate applications in 403 may include with respect to each candidate application in the set of candidate applications, determining that the candidate application is an application of the normal multimedia type when there is a multimedia information interaction in the candidate application and interacted multimedia information complies with a preset multimedia information screening condition.

With respect to each candidate application in the set of candidate applications, it is determined that the candidate application is an application of the normal location type when there is a location information interaction in the candidate application and interacted location information complies with a preset location information screening condition.

With respect to the each candidate application in the set of candidate applications, it is determined that the candidate application is of normal downloading type when there is a downloading data stream in the candidate application and the downloading data stream complies with the preset downloading condition.

With respect to the each candidate application in the set of candidate applications, it is determined that the candidate application is of the normal game type when there is an interaction control instruction in the candidate application and the interaction control instruction complies with a preset interaction instruction screening condition.

### Example Three

This example does not include the application white list exemplified in the above embodiment, but may include the rules One, Two and Three in the above embodiment, and an implementing order thereof is Rule One, Rule Two and Rule Three. In this embodiment, the process of determining whether the application to be managed exists in the applications currently running on the terminal is shown in FIG. 5, including: S501: acquiring candidate applications satisfying a preset first power consumption condition from applications currently running on the terminal, so as to obtain a set of candidate applications.

S502: determining, according to a preset application type identification rule, candidate applications of a preset application type from the set of candidate applications, then taking the remaining candidate applications in the set of candidate applications as target applications which will then be taken as current applications to be managed.

In this example, the process of determining, according to the preset application type identification rule, candidate applications of a preset application type from the set of candidate applications in 502 may include: with respect to a certain candidate application in the set of candidate applications, determining that the candidate application is an application of the normal multimedia type when there is a multimedia information interaction in the candidate application and interacted multimedia information complies with a preset multimedia information screening condition; otherwise, a next step is implemented.

It is determined that the candidate application is an application of the normal location type when there is a location information interaction in the candidate application and interacted location information complies with a preset location information screening condition; otherwise, a next step is implemented.

It is determined that the candidate application is of the normal multimedia type when there is a downloading data stream in the candidate application and the downloading data stream complies with a preset downloading condition; otherwise, a next step is implemented.

Accordingly, through the method for controlling an application provided in this embodiment, the applications to be managed that have abnormal power consumption and require power-saving control may be flexibly and accurately determined. Besides, the applications are controlled through such a power-saving manner as freezing the applications so that the terminal may be used for a longer time and a resource use rate is increased.

### Embodiment Three

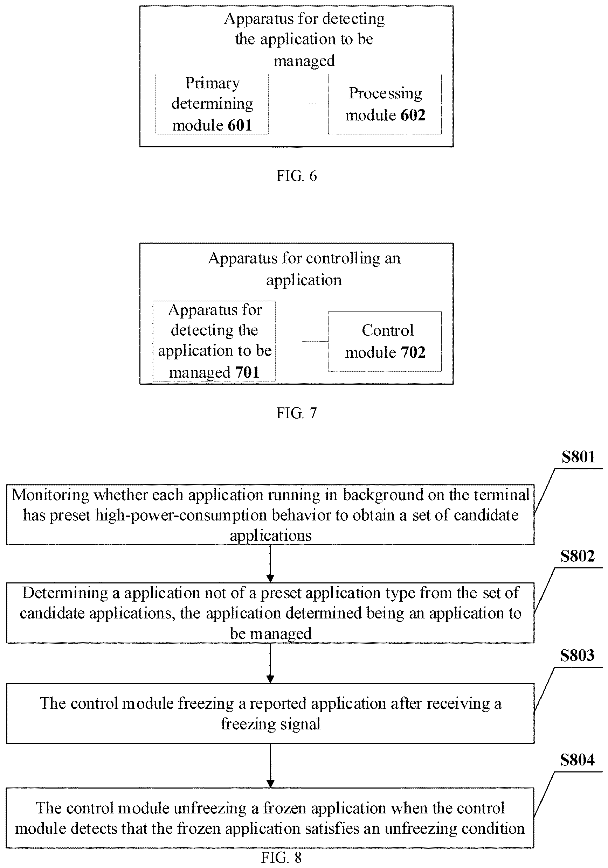

This embodiment provides an apparatus for detecting an application to be managed, which may be set in various terminals. With reference to FIG. 6, the apparatus for detecting an application to be managed includes: a primary determining module 601 configured to acquire candidate applications satisfying a preset first power consumption condition from applications currently running on the terminal, so as to obtain a set of candidate applications. For a particular process of obtaining the set of candidate applications, the above embodiments may be referred to and the process is not repeated.

The apparatus for detecting an application to be managed further includes: a processing module 602 configured to d determine, according to a preset application type identification rule, a target application from the set of candidate applications, the target application being not of a preset application type, and the target application being an application to be managed. For a particular determination process, a process of a target application with abnormal power consumption shown in the above embodiments may be referred to and is not repeated herein.

This embodiment provides an apparatus for controlling an application. With reference to FIG. 7, the apparatus for controlling an application includes an apparatus 701 for detecting the application to be managed and a control module 702. The apparatus 701 for detecting the application to be managed may be the apparatus for detecting the application to be managed shown in FIG. 6, or a detection apparatus using another method for detecting the application to be managed.

The control module 702 is configured to perform a power saving control on the application to be managed determined by the apparatus 701 for detecting the application to be managed.

It shall be appreciated that the control of the control module 702 on power saving of the application to be managed may be performed in various manners of performing power-saving control on the application, including but not limited to freezing the application or closing a process of the target application with great power consumption and so no.

It shall be appreciated that the function of the control module 702 may be implemented through a processor or a control in the terminal.

In order to facilitate understanding, apparatuses shown in FIG. 6 and FIG. 7 are set in a terminal (for example, a mobile phone or an ipad), and an entire process will be described of detecting each application in background running status on the terminal and freezing an application to be managed that needs to be provided with a power-saving control. As shown in FIG. 8, this embodiment provides a method for dynamically freezing an application to be managed, including: S801: monitoring whether each application running in background on the terminal has a preset high power consumption behavior (alias, an abnormal power consumption behavior) so as to obtain a set of candidate applications.

For example, when it is monitored that a certain application is switched from the foreground to the background, an action of the application may be monitored. Besides, in this embodiment, the applications may be continuously monitored whether they have abnormal power consumption behavior. If they have normal power consumption behavior, they will be included into the set of candidate applications, and a comprehensive determination of a next step is performed to determine whether report to a freezing module.

In this example, a manner of monitoring whether an application has an abnormal power consumption behavior includes but is not limited to the following exemplified manners: a central processing unit (CPU) being occupied continuously, a locking time being long, a memory being highly occupied, location being continuously abnormal and a sensor is used abnormally. It may be considered that there is an abnormal power consumption behavior as long as any one thereof occurs.

For example, an action that the central processing unit is occupied continuously may refer to, for example, the CPU being continuously occupied by 10% or more for 2 minutes, or the CPU being occupied for more than 5 minutes within 10 minutes, etc.

With respect to locking (i.e., occupancy of a wake lock) time detection, a time of core clocking or frame locking time of the application may be determined. It may be considered that a locking time is too long if a locking time is more than 10 minutes continuously or if the locking time is more than 10 minutes within 20 minutes.

The memory being highly occupied may refer to determining whether a memory of a background process is increased, or determining applications relatively ranking on top positions based on an absolute memory occupancy amount.

Continuous abnormal location may refer to first determining whether an application is a navigation type application, and if no, it is an abnormal action if a continuous application for location information lasts for more than 2 minutes or in another threshold. Alternatively, a determination may be made directly according to a condition of the continuous application for location information.

An abnormal use of sensor may refer to continuously applying for various types of sensors without releasing. For example, a sensor use is considered to be abnormal if using a hall sensor for more than 5 minutes without releasing.

As shown in analysis of the above embodiments, a determination calculation unit or determination method like a number of minutes or a resource occupancy amount as described in the above may be flexibly set according to an effect, condition or a particular application scenario, etc.

S802: determining a target application not of a preset application type from the set of candidate applications, the target application being an application to be managed.

After the above abnormal power consumption behavior is detected, it is considered that there is high power consumption behavior in an application in the set of candidate applications. It may be further determined whether the candidate applications are normally used or normally running. An exemplified process is as follows.

With regard to a candidate application, a sign of toFreeze of freezing of the candidate application may be initialized directly as True or as True or False according to an initial type of the candidate applications. Alternatively, another initialization rule may be used.

In one example, a database may be sought for package information of a candidate application having a high power consumption behavior. According to a package name, it may be determined which type the candidate application belongs to, i.e., to determine an initial type of the candidate application. Alternatively, when installing the application, the package name may be acquired to further determine which type the application belongs to.

In the following, that the sign of toFreeze of freezing of the candidate application is initialized as True is taken as an example for description.

For example, according to the Rules One to Three exemplified in the above embodiment, when it is determined that a candidate application is a video application (i.e., one of the normal multimedia type) and that the candidate application is currently broadcasting a video in background, it is determined that the candidate application is an application to be managed, and toFreeze=True and a package name (which may further be information uniquely identifying the application) of the candidate application are reported to the control module.

For another example, when it is determined that the candidate application is a downloading type application according to the package name, or it is monitored that the application has a downloading data stream, it may be further determined whether the candidate application currently has a downloading data amount. If yes, and the downloading data amount satisfies a preset downloading rate threshold, e.g., 10kb/s, a toFreeze status of the candidate application is updated to False. That is, the candidate application is not taken as an application to be managed and is not reported. If there is the downloading data amount but the downloading data amount does not achieve the preset downloading rate threshold or another rule in the above example, toFreeze=True and the package name of the candidate application are reported to the control module.

For another example, if it is determined that the initial type of the candidate application belongs to the navigation type based on the package name, the navigation application will locate the location in real time, which consumes more CPU and radio frequency resources. As shown above, toFreeze initialization of the candidate application is set to True. At this point, it may be continuously determined whether this application has an audio data stream. If there is an audio data stream, in this example, the type of the candidate application may be dynamically switched to a music type application (that is, one of normal multimedia types), and toFreeze=False of the candidate application is updated. After a period of time, if the candidate application changes to be without audio data but is still requesting for location information, the candidate application may be switched back to the navigation type, the candidate application is considered to be a location type application, and toFreeze=False is maintained. For another example, if the location information reported by the candidate application remains unchanged within 5 minutes, the candidate application is considered to be an abnormal location type application, and toFreeze=True of the candidate application is updated, which is finally reported to the control module.

For another example, if it is initially determined that a candidate application belongs to a real-time communication application based on the package name information, its toFreeze is initialized to True as shown above. Then a reason for why the application consumes two much power may be analyzed continuously. If the applicant occupies such long audio type locking time that the system does not enter the standby status, the candidate application may be updated to the audio type and toFreeze=False. For another example, when it is further monitored that the candidate application has an audio data stream and is in a mute status, it is considered that the candidate application belongs to an abnormal multimedia type application, specifically an abnormal audio type, and its toFreeze is updated to True and reported to the freezing module.

It shall be noted that the above are only some exemplified determination manners. Rule combination manners involved in the determination manners are only some examples and may be flexibly set and updated according to a particular comprehensive scenario.

In S803, finally, the control module freezes a reported application after receiving a freezing signal.

In S804: the control module may unfreeze a frozen application when the control module detects that the frozen application satisfies an unfreezing condition.

### Embodiment Four

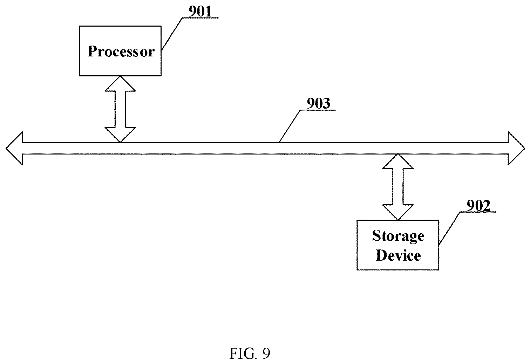

In this embodiment, a terminal is provided. The terminal includes but is not limited to a mobile terminal such as a smart phone, a laptop, a digital broadcast receiver, a personal digital assistant (PDA), a portable android device (PAD), a portable media player (PMP), a navigation apparatus and the like, and a fixed terminal such as a digital TV and a desktop computer. As shown in FIG. 9, the terminal includes a processor 901, a storage device 902 and a communication bus 903, the communication bus 903 configured to implement communication connection between the processor 901 and the storage device 902.

In one example, the processor 901 may be configured to execute one or more first computer programs stored in the storage device 902 to implement a step of the method for detecting an application to be managed in the above embodiments.

In another example, the processor 901 may be configured to execute one or more first computer programs stored in the storage device 902 to implement a step of the method for controlling an application in the above embodiments.

In this embodiment, a computer readable storage medium is provided. The computer readable storage medium includes a volatile or non-volatile, removable or irremovable medium implemented in any method or technology for storing information (for example, a computer readable instruction, a data structure, a computer program module or other data). The computer readable storage medium includes but is not limited to a random access memory (RAM), a read-only memory (ROM), an electrically erasable programmable read only memory (EEPROM), a flash memory or other memory technology, a compact disc read-only memory (CD-ROM), a digital versatile disc (DVD), or other optical disc storage device, a magnetic box, a magnetic tape, a magnetic disc storage device or other magnetic storage device, or any other medium that may be configured to store expected information and accessible by a computer.

In one example, the computer readable storage medium in this embodiment may be configured to store one or more first computer programs executable by one or more processors to realize a step of the method for detecting an application to be managed in each of the above embodiments.

In one example, the computer readable storage medium in this embodiment may be configured to store one or more second computer programs executable by one or more processors to realize a step of the method for controlling an application in each of the above embodiments.

In this embodiment, a fist computer program (or computer software) is provided. The first computer program may be distributed on a computer-readable medium and executed by a computable device to implement at least one step of the method for detecting an application to be managed shown in the above embodiments. In some cases, at least one step shown or described may be implemented in an order different from that is described in the above embodiments.

In this embodiment, a second computer program (or computer software) is provided. The second computer program may be distributed on a computer-readable medium and executed by a computable device to implement at least one step of the method for controlling an application shown in the above embodiments. In some cases, at least one step shown or described may be implemented in an order different from that is described in the above embodiments.

In this embodiment, a computer program product is further provided. The computer program product includes a computer readable apparatus, storing the first or second computer program as shown in the above. The computer readable apparatus in this embodiment may include the computer readable storage medium as shown in the above.

Accordingly, those skilled in the art should understand that functional modules/units in all or some of the steps, systems and apparatuses may be implemented as software (which can be implemented with a computer program code executable by a computing apparatus), firmware, hardware and an appropriate combination thereof. In a hardware implementation, division between functional modules/units mentioned in the above description does not necessarily correspond to division of physical components. For example, one physical component may have multiple functions, or one function or step may be implemented by several physical components. Some or all physical components may be implemented as software implemented by a processor, such as a central processing unit, a digital signal processor, or a microprocessor, or as hardware, or as an integrated circuit like an application specific integrated circuit.

In addition, as is well known to those of ordinary skill in the art, communication medium usually contains computer-readable instructions, data structures, computer program modules, or other data in a modulated data signal such as a carrier wave or other transmission mechanism, and may include any information delivery medium. Therefore, the present application is not limited to any specific hardware and software combination.

The above content is further detailed description of the embodiments of the present disclosure according to specific implementations, and it cannot be determined that the specific implementations of the application are limited to the description. For those of ordinary skill in the art to which the present disclosure belongs, several simple deductions or substitutions may be made without departing from the concept of the present disclosure and should be taken as falling within the protection scope of the present disclosure.

## Claims

1. A method for detecting an application to be managed, comprising:
acquiring candidate applications satisfying a preset first power consumption condition from applications currently running on the terminal, so as to obtain a set of candidate applications; and
determining, according to a preset application type identification rule, a target application from the set of candidate applications, the target application being not of a preset application type, and the target application being an application to be managed.

2. The method for detecting the application to be managed according to claim 1, wherein, before the step of determining, according to the preset application type identification rule, the target application from the set of candidate applications, the method further comprises:
deleting a candidate application from the set of candidate applications when it is determined that the candidate application is an application in a preset application white list.

3. The method for detecting the application to be managed according to claim 1, wherein the preset first power consumption condition comprises:
the application being running in background currently and having a preset high power consumption behavior.

4. The method for detecting the application to be managed according to claim 3, wherein the preset high power consumption behavior comprises at least one of the following:
an occupancy status of a processor complying with a preset first status;
an occupancy status of a memory complying with a preset second status;
an occupancy status of a wake lock complying with a preset third status;
an occupancy status of a location resource complying with a preset fourth status; and
an occupancy status of a sensor resource complying with a preset fifth status.

5. The method for detecting the application to be managed according to any one of claims 1 to 4, wherein the preset application type comprises at least one of a normal location type, a normal multimedia type, a normal game type and a normal downloading type; and
the preset application type identification rule comprises at least one of the following rules:
determining that a candidate application is an application of the normal location type, when the preset application type comprises the normal location type, there is a location information interaction in the candidate application and interacted location information complies with a preset location information screening condition;
determining that a candidate application is an application of the normal multimedia type, when the preset application type comprises the normal multimedia type, there is a multimedia information interaction in the candidate application and interacted multimedia information complies with a preset multimedia information screening condition;
determining that a candidate application is an application of the normal game type, when the preset application type comprises the normal game type, there is an interaction control instruction in the candidate application and the interaction control instruction complies with a preset interaction instruction screening condition; and
determining that a candidate application is an application of the normal multimedia type, when the preset application type comprises the normal downloading type, there is a downloading data stream in the candidate application and the downloading data stream complies with a preset downloading condition.

6. The method for detecting the application to be managed according to claim 5, wherein when the preset application type comprises the normal location type, the preset location information screening condition comprises at least one of the following:
locations corresponding to location data interacted within a preset time period being different; and
the interacted location information not comprising audio data.

7. The method for detecting the application to be managed according to claim 5, wherein when the preset application type comprises the normal multimedia type, the preset multimedia information screening condition comprises at least one of the following:
when the interacted multimedia information comprises video data, the video data not comprising video playing data; and
when the interacted multimedia information comprises audio data, the audio data not comprising audio data in a mute status .

8. The method for detecting the application to be managed according to claim 5, wherein when the preset application type comprises the normal downloading type, the preset downloading condition comprises:
a downloading rate of the downloading data stream being greater than or equal to a preset downloading rate value.

9. A method for controlling an application, comprising:
determining an application to be managed from the applications currently running on the terminal by the method for detecting the application to be managed according to any one of claims 1 to 8; and
performing a power saving control on the application to be managed.

10. An apparatus for detecting an application to be managed, comprising:
a primary determining module configured to acquire candidate applications satisfying a preset first power consumption condition from applications currently running on the terminal, so as to obtain a set of candidate applications; and
a processing module configured to determine, according to a preset application type identification rule, a target application from the set of candidate applications, the target application being not of a preset application type, and the target application being an application to be managed.

11. The apparatus for detecting the application to be managed according to claim 9, wherein a preset first power consumption condition comprises:
the application being running in background currently and having a preset high power consumption behavior.

12. The apparatus for detecting the application to be managed according to claim 9 or 10, wherein, the preset application type comprises at least one of a normal location type, a normal multimedia type, a normal game type and a normal downloading type; and
the preset application type identification rule comprises at least one of the following rules:
determining that a candidate application is an application of the normal location type, when the preset application type comprises the normal location type, there is a location information interaction in the candidate application and interacted location information complies with a preset location information screening condition;
determining that a candidate application is an application of the normal multimedia type, when the preset application type comprises the normal multimedia type, there is a multimedia information interaction in the candidate application and interacted multimedia information complies with a preset multimedia information screening condition;
determining that a candidate application is an application of the normal game type, when the preset application type comprises the normal game type, there is an interaction control instruction in the candidate application and the interaction control instruction complies with a preset interaction instruction screening condition; and
determining that a candidate application is an application of the normal multimedia type, when the preset application type comprises the normal downloading type, there is a downloading data stream in the candidate application and the downloading data stream complies with a preset downloading condition.

13. An apparatus for controlling an application, comprising the apparatus for detecting the application to be managed according to any one of claims 10 to 12 and a control module;
wherein, the control module is configured to perform a power saving control on the application to be managed determined by an apparatus for detecting an abnormal application.

14. A terminal, comprising a processor, a storage device and a communication bus;
the communication bus being configured to connect the processor with the storage device;
the processor being configured to execute a first computer program stored in the storage device to implement steps of the method for detecting the application to be managed according to any one of claims 1 to 8;
or,
the processor being configured to execute a second computer program stored in the storage device to implement steps of the method for controlling the application according to claim 9.

15. A computer readable storage medium storing therein one or more first computer programs executable by one or more processors to implement steps of the method for detecting the application to be managed according to any one of claims 1 to 8; or
the computer readable storage medium storing therein one or more second computer programs executable by one or more processors to implement steps of the method for controlling the application according to claim 9.
